Europäisches Patentamt

European Patent Office

Office européen des brevets

(19)

(11) Numéro de publication : **0 320 389 B1**

# (12) FASCICULE DE BREVET EUROPEEN

(45) Date de publication du fascicule du brevet :
04.09.91 Bulletin 91/36

(51) Int. Cl.⁵ : **B60K 15/035, B60K 15/06**

(21) Numéro de dépôt : **88403121.2**

(22) Date de dépôt : **08.12.88**

(54) **Réservoir de carburant pour véhicule automobile.**

(30) Priorité : **10.12.87 FR 8717519**

(43) Date de publication de la demande :
**14.06.89 Bulletin 89/24**

(45) Mention de la délivrance du brevet :
**04.09.91 Bulletin 91/36**

(84) Etats contractants désignés :
**DE ES GB IT**

(56) Documents cités :
**EP-A- 0 106 747**
**EP-A- 0 128 504**
**EP-A- 0 194 909**
**EP-A- 0 203 711**
**DE-A- 2 849 461**
**DE-A- 3 312 819**
**GB-A- 2 174 651**
**US-A- 3 020 950**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Stee, Lucien**
**1, Place des Onze Arpents**
**F-94800 Villejuif (FR)**

(74) Mandataire : **Boivin, Claude**
**9, rue Edouard-Charton**
**F-78000 Versailles (FR)**

EP 0 320 389 B1

Jouve, 18, rue Saint-Denis, 75001 PARIS

## Description

On connait des réservoirs de carburant pour véhicule automobile comportant un bac de réserve pour carburant, de capacité réduite, dans lequel débouche le conduit d'aspiration pour l'alimentation du moteur. Ce bac retient la quantité nécessaire de combustible autour de l'ouverture du conduit d'aspiration lorsqu'il y a peu de combustible dans le réservoir, afin d'empêcher que la pompe d'alimentation reliée au conduit aspire de l'air lorsque le véhicule accélère, décélère, monte ou descend une côte, vire rapidement à droite ou à gauche, ou est parqué en côte. Un réservoir de ce genre est décrit dans le document FR-A-2453045.

Mais les réservoirs de ce genre jusqu'à présent réalisés ne peuvent fonctionner lorsqu'ils possèdent un tunnel important près du conduit d'aspiration. Il n'est en effet pas possible d'avoir un volume constant dans la zone d'aspiration dans tous les cas de virage car, dans un virage à droite par exemple, tout le carburant passe à gauche dans le réservoir.

La présente invention a pour objet un réservoir à bac de réserve qui, au contraire, fonctionne malgré la forme que doit avoir le fond du réservoir pour permettre le logement du tunnel de passage de l'arbre de transmission, et maintient un volume presque constant du carburant dans la zone d'aspiration quelles qu'soient la position du véhicule ou les conditions de déplacement.

Le réservoir de carburant selon l'invention dans lequel le bac de réserve comprend une chambre intérieure et une chambre extérieure annulaire communiquant avec la chambre intérieure, est caractérisé en ce qu'il comporte un décrochement en saillie pour le passage de l'arbre de transmission du véhicule, en ce que le bac de réserve est adossé à ce décrochement et en ce que la chambre extérieure est fermée à sa partie supérieure et comporte un premier orifice à sa partie supérieure et un second orifice dans sa partie inférieure, ces orifices permettant respectivement l'évacuation de l'air et le remplissage de la chambre extérieure à partir du réservoir, alors qu'au contraire la chambre intérieure est ouverte à sa partie supérieure. Dans ces conditions, la chambre extérieure ne se vide dans la chambre intérieure que lorsque le niveau dans cette dernière baisse suffisamment pour laisser pénétrer de l'air dans la chambre extérieure par l'ouverture faisant communiquer les deux chambres.

On a décrit ci-après, à titre d'exemple non limitatif, un mode de réalisation du réservoir selon l'invention, avec référence aux dessins annexés dans lesquels :

La Figure 1 est une vue en coupe verticale du réservoir par un plan perpendiculaire à l'axe longitudinal du véhicule, suivant I-I de la Figure 2 ;

La Figure 2 en est une vue en coupe horizontale;

La Figure 3 est une vue en coupe horizontale du bac de réserve ;

La Figure 4 en est une coupe verticale suivant IV-IV de la figure 3 ;

La figure 5 en est une coupe verticale suivant V-V de la Figure 3.

Tel qu'il est représenté au dessin, le réservoir de carburant 1 est disposé transversalement et comporte un bac de réserve 2 au contact de la paroi avant du réservoir et dans lequel débouche le conduit d'aspiration d'essence 3 excentré par rapport au bac. Ce réservoir est destiné à être posé sur le plancher du véhicule et sa paroi inférieure comporte un décrochement 4 en saillie pour le logement du tunnel de passage de l'arbre de transmission ; le bac de réserve 2 est adossé à la droite de ce décrochement.

Le bac de réserve 2 comporte une paroi intérieure 5 qui le divise en une chambre intérieure 6 et une chambre annulaire extérieure 7 pouvant communiquer l'une avec l'autre par une ouverture 8.

La chambre intérieure 6 est ouverte à sa partie supérieure et contient le conduit d'aspiration 3 ; elle présente une forme tronconique dont le sommet fictif est dirigé vers le bas. De son côté, la chambre extérieure 7 est fermée à sa partie supérieure ; dans sa partie de plus grand volume, elle a une forme extérieure tronconique dont le sommet fictif est dirigé vers le haut. Cette chambre 7 présente à sa partie supérieure un orifice de sortie d'air 9 et, dans sa partie inférieure, une dépression 10 en forme de crochet qui est dirigée vers l'arrière du véhicule et dans laquelle est ménagé un orifice 11.

L'ouverture 8 débouche dans la partie de plus faible volume de la chambre 7 ; elle s'étend jusqu'à la base des chambres 5 et 6 et son bord supérieur 8a est situé dans un plan oblique par rapport au fond du bac.

Lors du remplissage du réservoir 1, le carburant pénètre par le trou 11 dans la chambre annulaire 7 et, en traversant l'ouverture 8, dans la chambre intérieure 6.

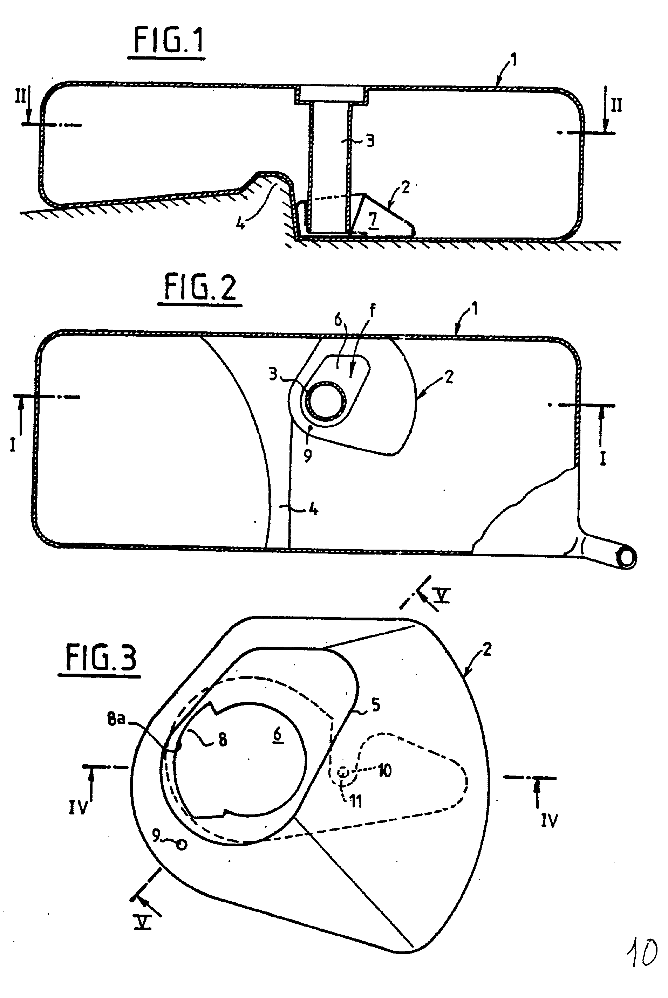

A chaque freinage du véhicule, le carburant qui reste dans le réservoir 1 passe dans le bac 2, comme indiqué par la flèche f à la Figure 2 et en assure le remplissage systématique.

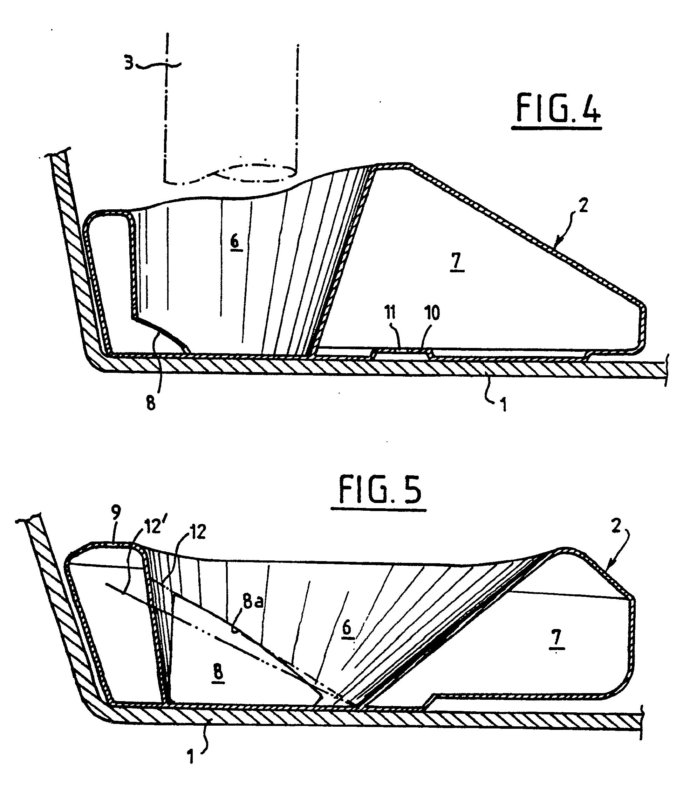

Un virage à droite est le cas le plus défavorable car la présence du décrochement 4 perturbe le retour du carburant dans la partie gauche du réservoir 1 (voir Figure 1). Mais le niveau du carburant dans la chambre intérieure 6 s'incline comme indiqué par la référence 12 et seul le volume sous l'ouverture 8 peut être consommé. Lors du déplacement du véhicule, une certaine quantité de carburant est pompée dans ce volume. Dès que la surface de ce volume passe sous le bord supérieur de l'ouverture 8, (comme indiqué en 12' à la Figure 5), de l'air pénètre dans la chambre 7. De manière analogue, le carburant contenu dans la chambre exterieure 7 pénètre dans la chambre intérieure 5 en proportion de l'air qui entre dans la chambre 7. Le volume 13 augmente et obstrue de nouveau l'ouverture 8 ; l'air ne passant plus, la chambre 7 ne se vide plus dans la chambre 6.

Lorsque le véhicule accélère ou stationne en côte en ayant l'avant du véhicule dirigé vers le haut, le phénomène est le même.

## Revendications

1. Réservoir de carburant pour véhicule automobile comportant un bac de réserve (2) dans lequel débouche un bac d'aspiration (3) pour l'alimentation du moteur et qui comprend une chambre intérieure (6) et une chambre extérieure annulaire (7) communiquant avec la chambre intérieure, caractérisé en ce qu'il comporte un décrochement en saillie (4) pour le passage de l'arbre de transmission du véhicule, en ce que le bac de réserve (2) est adossé à ce décrochement (4) et, en ce que la chambre extérieure (7) du bac (2) est fermée à sa partie supérieure et comporte un premier orifice (9) à sa partie supérieure et un second orifice (11) dans sa partie inférieure, ces orifices permettant respectivement l'évacuation de l'air et le remplissage de la chambre extérieure à partir du réservoir, alors qu' au contraire la chambre intérieure (6) est ouverte à sa partie supérieure.

2. Réservoir de carburant selon la revendication 1, caractérisé en ce que la chambre extérieure (7) a une forme extérieure tronconique dont le sommet fictif est dirigé vers le haut.

3. Réservoir de carburant selon la revendication 1 ou 2, caractérisé en ce que la chambre intérieure (6) présente une forme tronconique dont le sommet fictif est dirigé vers le bas.

4. Réservoir de carburant selon l'une quelconque des revendications précédentes, caractérisé en ce qu'il présente à sa partie inférieure une dépression (10) en forme de crochet qui est dirigée vers l'arrière du véhicule et dans laquelle débouche l'orifice (11).

5. Réservoir de carburant selon l'une quelconque des revendications précédentes, caractérisé en ce que l'ouverture (8) s'étend jusqu'au fond du bac et que son bord supérieur (8a) est situé dans un plan oblique par rapport à ce fond.

## Patentansprüche

1. Kraftstofftank für Kraftfahrzeug mit einem Reservebehälter (2), in welchen ein Einfüllgefäß (3) für die Versorgung des Motors mündet und der eine innen befindliche Kammer (6) und eine äußere ringförmige, mit der innen befindlichen Kammer kommunizierende Kammer (7) umfaßt, **dadurch gekennzeichnet**, daß er einen vorspringenden Absatz (4) für den Durchlaß der Getriebewelle des Fahrzeugs aufweist, daß sich der Reservebehälter (2) an diesem vorspringenden Absatz (4) anlehnt, und daß die äußere Kammer (7) des Behälters (2) am Oberteil geschlossen ist und eine erste Öffnung (9) an ihrem Oberteil und eine zweite Öffnung (11) an ihrem Boden aufweist, wobei diese Öffnungen das Entweichen der Luft bzw. die Füllung der äußeren Kammer aus dem Behälter ermöglichen, während dagegen die innen befindliche Kammer (6) an ihrem Oberteil offen ist.

2. Kraftstofftank nach Anspruch 1, **dadurch gekennzeichnet**, daß die äußere Kammer (7) die Außenform eines Kegelstumpfes besitzt, dessen fiktive Spitze nach oben gerichtet ist.

3. Kraftstofftank nach Anspruch 1 oder 2, **dadurch gekennzeichnet**, daß die innen befindliche Kammer (6) die Form eines Kegelstumpfes aufweist, dessen fiktive Spitze nach unten gerichtet ist.

4. Kraftstofftank nach einem der vorhergehenden Ansprüche, **dadurch gekennzeichnet**, daß er an seinem Boden eine in Form eines zur Rückseite des Fahrzeugs gerichteten Hakens ausgebildete Vertiefung (10) aufweist, in die die Öffnung (11) einmündet.

5. Kraftstofftank nach einem der vorhergehenden Ansprüche, **dadurch gekennzeichnet**, daß sich die Öffnung (8) bis zum Boden des Behälters erstreckt und ihr oberer Rand (8a) in einer zu diesem Boden schräg verlaufenden Ebene angeordnet ist.

## Claims

1. Fuel tank for a motor vehicle comprising a reserve tank (2) into which a induction pipe (3) opens so as to feed the motor and which includes one internal chamber (6) and one annular outer chamber (7) communicating with the internal chamber, wherein it comprises a projecting step (4) for passage of the transmission shaft of the vehicle, the reserve tank (2) backs onto this step (4), and the outer chamber (7) of the tank (2) is closed at its upper portion and comprises a first orifice (9) at its upper portion and a second orifice (11) in its lower portion, these orifices respectively allowing for removal of air and filling of the outer chamber from the tank, whereas the internal chamber (6) is open at its upper portion.

2. Fuel tank according to claim 1, wherein the outer chamber (7) has an external truncated shape whose theoretical top is directed upwards.

3. Fuel tank according to claim 1 or 2, wherein the internal chamber (6) has a truncated shape whose theoretical top is directed downwards.

4. Fuel tank according to any one of the preceding claims, wherein it has at its lower portion a hook-shaped depression directed towards the rear of the vehicle and into which the orifice (11) opens.

5. Fuel tank according to any one of the preceding claims, wherein the opening (8) extends as far as the bottom of the reserve tank and its upper edge (8a) is situated within a plane oblique with respect to this bot-

tom.

## FIG.1

## FIG.2

## FIG.3

10

FIG. 4

FIG. 5